# EUROPÄISCHE PATENTANMELDUNG

(11) **EP 0 935 388 A1**
(43) Veröffentlichungstag der Anmeldung: **11.08.1999**
(21) Anmeldenummer: 99101251.9
(22) Anmeldetag: 23.01.1999
(51) Int. Cl.: H04N 5/247, F16L 55/18, F16L 55/26

(54) **Kamerakopf**

(30) Priorität: 05.02.1998 DE 19804524
(71) Anmelder: IBAK HELMUT HUNGER GmbH & CO. KG, 24148 Kiel (DE)
(72) Erfinder: Ermoneit, Klaus, 24226 Heikendorf (DE)
(74) Vertreter: Tönnies, Jan G. Boehmert & Boehmert, Anwaltssozietät

(57) **Zusammenfassung**

Kamerakopf zur lagerichtigen Übermittlung eines Fernsehbildes aus einer Röhre, mit einem Kragen (10) zur außermittigen Aufnahme der die Kamera und eine Beleuchtung ausmachenden Teile an einem Schubstrang, wobei der Kragen (10) aus einem gegenüber der Gesamtheit der Kamerakomponenten leichteren Material besteht, und wobei die schweren Teile der Kamera im unteren Bereich des Kragens gelagert sind.

## Beschreibung

Die Erfindung betrifft einen Kamerakopf.

Bisher werden, wie beispielsweise in dem deutschen Gebrauchsmuster 296 15 608.6 beschrieben, zur lagerichtigen Erfassung und Aufzeichnung von Bildinformationen aus dem Inneren von Rohren die TV-Elektroniken pendelnd aufgehängt, so daß sie ab einem bestimmten Fehlwinkel "sich wieder neu in die Vertikale" innerhalb eines Gehäuses einpendelt.

Dabei ist jedoch die Koppelung der Signalleitung und der stromführenden Leitungen aufwendig. Als Problemfall tritt die Schwergängigkeit aufgrund der Haftreibung in den Kugellagern auf. Dies ist die Ursache für eine Totzeit und eine Dämpfung im Nachführverhalten, so daß erst bei einer Fehlstellung im Bereich von mehr als 10 ° nachgeführt wird. Daher ist im obengenannten Gebrauchsmuster eine zusätzliche weitere Verbindungseinrichtung geschaffen, die eine Grobeinstellung von einer leichter bewirkbaren Feineinstellung trennt.

Mit einer derartigen Konstruktion lassen sich vorhandene Kameraköpfe jedoch nicht nachträglich versehen. Es wird daher nach einfach herzustellenden Lösungen, insbesondere zur Nachrüstung gesucht.

Die Erfindung hat sich daher zur Aufgabe gestellt, eine einfache Vorrichtung zur lagerichtigen Orientierung des TV-Bildes zu schaffen.

Erfindungsgemäß wird dies durch einen Kamerakopf mit den Merkmalen des Hauptanspruches gelöst. Die Unteransprüche geben vorteilhafte Ausführungsformen der Erfindung wieder.

Insbesondere ist vorteilhaft, daß durch die Vorsehung eines äußeren Kragens zu außermittigen Aufnahme der Kamera bisher vorhandene Kameraköpfe nachgerüstet werden können. In dem Kragen steht zudem noch Raum zur Aufnahme von Positioniereinrichtungen bzw. Wiederauffindeeinrichtungen, etwa einem Funk-Empfänger oder -geber zur Verfügung. Diese können mit separater Stromversorgung ausgerüstet werden, so daß der Kragen einfach auf ein geschlossenes Gehäuse einer Kamera aufgeschoben werden kann, diese also zusätzlich noch mechanisch schützt.

Der Erfindung liegt dabei zugrunde, daß der Kamerakopf bei seiner fortschreitenden Einführung in ein Rohr durch seine gelenkige Lage am Schubelement sich allein durch die vom Kragen vorgegebene außermittige Gewichtsverteilung in eine lagerichtige Position einstellt. Etwaige über längere Zeiträume vorhandene Fehleinstellungen, wie sie bisher durch Schleifringanordnungen bekannt waren, sind durch das dauernde fortschreitende Kontaktieren der Außenwand mit anschließendem Nachrutschen in die bevorzugte "richtige" Lage nicht zu befürchten.

Die Konfiguration des Kragens läßt sich aus den Querschnittdarstellungen erkennen, wobei die Kamera in der großen Bohrung gehalten wird. Eine derartige Axialsichtkamera wird schon durch die Lage der Kamera in dem Kragen und die Anhäufung von Material im unteren Teil zur Rohrsohle hin bewegt. Durch die Außenkontur wird zudem dann sichergestellt, daß die Rückstellkräfte die Rohrführung in eine für die Kamera lagerichtige Position bringen. Insbesondere kann ein Ortungssensor im unteren Teil der Rohrführung angebracht werden, wobei insbesondere die Batterien als zusätzliches Gewicht dienen.

In wenigstens einem mittleren Bereich in Axialerstreckung wird der Kragen mit einem äußeren Rand versehen sein, der nach oben hin aus der Rundung heraus vergleichsweise spitz im Gegensatz zu dem platter gehaltenen Boden ausgebildet ist. Im Querschnitt wird sich also eine annähernde flache Eiform ergeben, wobei die flache Unterseite dichter an den Schwerpunkt gerückt ist.

Weitere Merkmale und Vorteile der Erfindung ergeben sich aus nachfolgender Beschreibung eines bevorzugten Ausführungsbeispiels anhand der beigefügten Zeichnung. Dabei zeigt:
- Fig. 1: die erfindungsgemäße Ausbildung des Kragens in der Vorderansicht,
- Fig. 2: die erfindungsgemäße Ausbildung eines Kragens im Längsschnitt, und
- Fig. 3: die sich ergebenden Hebelverhältnisse bei Anlagerung gegen eine Wand.

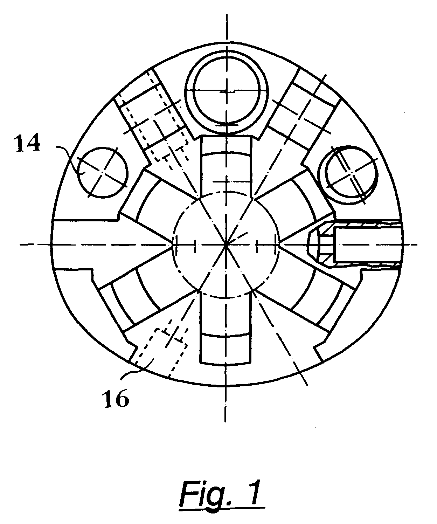

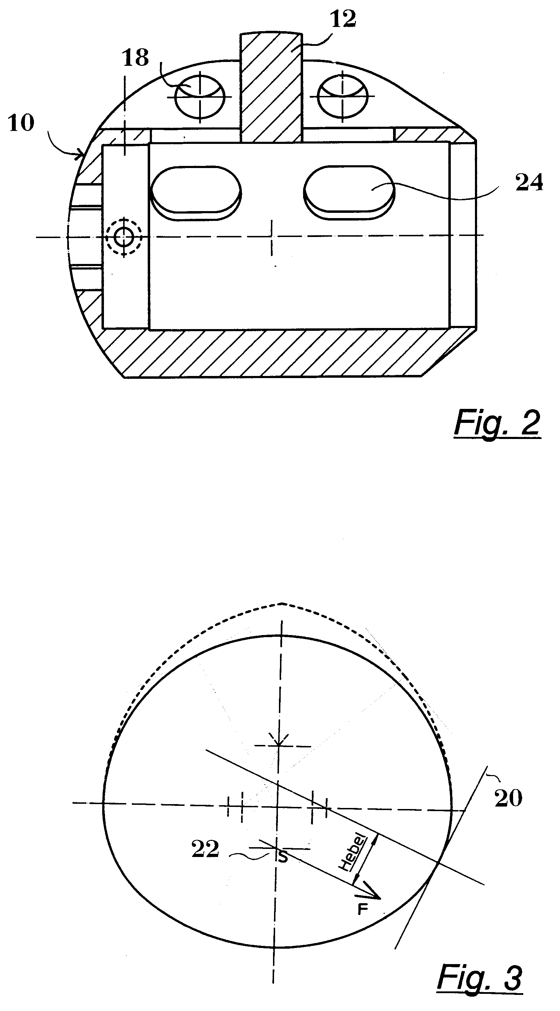

Der in den Fig. 1 und Fig. 2 dargestellte Kragen 10 ist mit einer Vielzahl von Durchbrüchen 18, 24 zum Kontaktieren mit dem umgebenden Medium insbesondere zur Kühlung der energieabgebenden Kameraelektronik und Beleuchtung versehen. Ein Funksender wird zusätzlich mit Batterien 16 dezentral mit Strom versorgt und ist daher vergleichsweise schwer, während die TV-Elektronik über die Versorgungskabel mit Strom versorgt wird und auch ihre TV-Signale so wieder abgibt. Über Schubschläuche ist ein Schubstrang hinter dem Kamerakopf gebildet, über den dieser fortbewegt wird.

Vorteilhafterweise wird ein freidrehbares Gelenk vor dem Kamerakopf vorgesehen, so daß dieser aufgrund seiner Formgebung sich jeweils an dem Boden der Rohrleitung, durch die er hindurchgeschoben wird, anlegen kann. Die Formgebung sieht dabei einen exzentrischen Bereich an der Oberseite vor, der als spitzovale Überkragung 12 einer an der Unterseite zudem vorteilhafterweise vorgenommenen Abflachung gegenüber liegt, so daß sich insgesamt Radiusverhältnisse von einem Mittelpunkt der Kamera aus ergeben, die annähernd die Verhältnisse 4 zu 3,4 zu 4,9 für die Radien zur Seite, zum Boden und zur Spitze hin annehmen.

Zur Erleichterung des Verrutschens in die Lage am Boden einer Rohrleitung wird vorgesehen, den exzentrischen Bereich 12 an der Spitze nicht über die gesamte Längserstreckung, sondern nur als eine oder eine Mehrzahl von den oberen Bereich überspannenden Gleitkufen vorzusehen, zwischen denen Kontakt des meist metallischen Kameragehäuses zur Kühlung mit dem Umgebungsmedium in den Rohrleitungen möglich ist.

Als Material für den Kamerakragen wird Kunststoff oder Leichtmetall vorgeschlagen, das wesentlich leichter als die übrigen Einrichtungen der Kamera ist.

Fig. 3 zeigt die spezielle Form, sowie die Hebelverhältnisse, welche durch die Lage des Schwerpunktes entstehen und den Kragen zwingen, eine bestimmte Lage einzunehmen.

Es wird ersichtlich, daß der Schwerpunkt 22 des Systems so gelegt ist, daß bei Abweichungen von der idealen Lage immer ein rückstellendes Moment entsteht. D.h. die äußere Form des Kragens muß, wie dargestellt, eine Kurve sein, bei der in jedem Auflagepunkt der Schwerpunkt einen Abstand (Hebel) zur Senkrechten der Auflagepunkttangenten 20 aufweist, und zwar so, daß durch den Schwerpunkt ein Moment erzeugt wird, das den Kragen in die korrekte Lage dreht.

## Patentansprüche

1. Kamerakopf zur lagerichtigen Übermittlung eines Fernsehbildes aus einer Röhre, gekennzeichnet durch einen Kragen (10) zur außermittigen Aufnahme der die Kamera und eine Beleuchtung ausmachenden Teile an einem Schubstrang, wobei der Kragen (10) aus einem gegenüber der Gesamtheit der Kamerakomponenten leichteren Material besteht, und wobei die schweren Teile der Kamera im unteren Bereich des Kragens gelagert sind.

2. Kamerakopf nach Anspruch 1, dadurch gekennzeichnet, daß an der Oberseite ein einen annähernd runden Querschnitt überragender exzentrischer Bereich (12) des Kragens (10) vorgesehen ist.

3. Kamerakopf nach einem der vorangehenden Ansprüche, dadurch gekennzeichnet, daß der exzentrische Bereich (12) im Querschnitt nach oben spitz oval vorragt.

4. Kamerkopf nach einem der vorangehenden Ansprüche, dadurch gekennzeichnet, daß der die Kamerateile umgebende Kragen (10) an der Unterseite flacher als an den beiden Seiten ausgebildet ist.

5. Kamerakopf nach der vorangehenden Ansprüche, dadurch gekennzeichnet, daß die Radien im Querschnitt in einem Verhältnis von
ca. 4 zu ca. 3,4 zu ca. 4,9
für die Werte vom
Mittelpunkt der Kamera zur Seite,
zum Boden und
zur Spitze
vorgesehen sind.
